# EUROPEAN PATENT APPLICATION

(11) **EP 1 548 582 A1**
(43) Date of publication of application: **29.06.2005**
(21) Application number: 03795345.2
(22) Date of filing: 10.09.2003
(51) Int. Cl.: G06F 9/445, H04Q 7/38

(54) **METHOD FOR MANAGING USE OF STORAGE REGION BY APPLICATION**

(30) Priority: 10.09.2002 JP 2002264246
(71) Applicant: NTT DoCoMo, Inc., Tokyo 100-6150 (JP); Sony Corporation, Tokyo 141-0001 (JP)
(72) Inventor: NISHIO, Hideaki, c/o IP Department NTT DoCoMo Inc., Chiyoda-ku, Tokyo 100-6150 (JP); NAKAMURA, Tomonori, c/o IP Dept. NTT DoCoMo, Inc., Chiyoda-ku, Tokyo 100-6150 (JP); SAITOH, Takuji, c/o IP Department NTT DoCoMo, Inc., Chiyoda-ku, Tokyo 100-6150 (JP); SAWADA, Hisanori, c/o IP Dept. NTT DoCoMo, Inc., Chiyoda-ku, Tokyo 100-6150 (JP)
(74) Representative: HOFFMANN - EITLE
(86) International application number: PCT/JP2003/011532
(87) International publication number: WO 2004/025464

(57) **Abstract**

In a mobile phone 600, a trusted application and a download helper are executed to generate an area reservation request message for requesting reservation of a storage area for storing a program, data, and the like. This message is transmitted to an area management server 500. When the area management server 500 receives the area reservation message, it transmits an area reservation instruction message to the mobile phone 600. When the mobile phone 600 receives the area reservation instruction message, the storage area for storing the program, the data, and the like is reserved in an external memory. A downloaded program and data are stored into this area.

## Description

### TECHNICAL FIELD

The present invention relates to a method and an apparatus for managing areas inside a storage unit of a communication terminal to be used by applications.

### BACKGROUND ART

In recent years, mobile communication terminals such as a mobile phone have been used to access WWW (World Wide Web) servers over the Internet, thereby browsing websites or downloading and executing application programs (hereinafter, referred to simply as applications) executable on mobile phones. The downloaded applications are first typically stored into a nonvolatile memory or the like built in a mobile phone. The applications are then read from this memory and executed when needed.

In contrast to hard disks and the like provided on PCs (Personal Computers) etc., however, the nonvolatile memories built in mobile phones typically have small storage capacities. It is therefore impossible to store many applications. Consequently, when a new application is downloaded with no sufficient free space in the storage areas, the application(s) stored previously must be erased before the new application is stored. Besides, when applications once erased are to be executed again, the WWW servers must naturally be accessed again for download. This means operations troublesome to the users of the mobile phones. Then, for the sake of compensating the small storage capacities, detachable external memories are attached to the mobile phones so that the downloaded applications are stored into these external memories.

With the advance and sophistication of applications in recent years, however, application sizes are also growing by leaps. It is thus difficult to provide sufficient memory capacities even by using external memories.

In general, downloading an application requires that a storage area for storing the application itself and a storage area for storing data to be used by the application both be reserved. Since applications have different sizes and use different amounts of data, the necessary storage capacities vary from one application to another. Thus, for example, when the sizes of areas to be reserved for applications are fixed uniformly, there can occur spaces in which neither an application itself nor data to be used by the application is stored.
The generation of such wasted spaces for no use at all is against efficiency.

For efficient use of storage areas, it is preferable to change the sizes of areas to reserve in accordance with the sizes of the applications to be downloaded. In this case, an external memory is usually accessed by using both an interface for accessing the external memory and a device driver, a program for controlling this interface. To be more specific, permission to use the foregoing device driver and the like is granted to the applications, thereby allowing accesses to the external memory. This makes it possible to reserve storage areas of necessary and sufficient sizes depending on the applications.

Nevertheless, if free accesses to the external memory are thus given to the applications downloaded to the terminal, there can occur the security problem that unauthorized applications tamper or erase other applications or data stored in the external memory. In addition, some applications might reserve excessively large storage areas.

To avoid such unforeseeable circumstances, there has been a method of setting storage areas to be allocated for applications in advance (see Japanese Laid-open Patent Application Publication No. 2000-172490). Specifically, before downloading applications, the user of the mobile terminal sets the storage areas for storing the applications.

Nevertheless, it is troublesome for the user to make an area setting upon each application download. Nevertheless, setting the storage areas for storing applications to be installed in uniform sizes regardless of the sizes of the respective applications might cause the problem, as described above, that applications having sizes greater than those of the areas reserved cannot be installed. In addition, if applications have sizes extremely smaller than those of the storage areas reserved, there arise a lot of unused spaces, precluding efficient use of the external memory.

### DISCLOSURE OF THE INVENTION

The present invention has been achieved in view of the foregoing circumstances. It is thus an object of the present invention to provide a method for managing an area inside a storage unit of a communication terminal for storing an application and data to be used by the application appropriately, and an area management apparatus, a mobile communication terminal, a program, and a recording medium for use with the method.

The present invention provides a storage area management method comprising: a request step of transmitting an authorization request from a communication terminal having a storage unit to an area management apparatus, the authorization request requesting an authorization to set an area available for an application in said storage unit; an instruction step of, when said area management apparatus receives said authorization request, determining in said area management apparatus a storage area to be allocated for said application based on said received authorization request, and transmitting to said communication terminal an execution instruction to execute setting of the determined storage area; and a setting step of, when said communication terminal receives said execution instruction, setting said determined storage area in said storage unit.

According to a preferred embodiment, the storage area management method of the present invention further comprises a storing step of downloading the application from a content server or the area management server and storing the application into the set area, by the communication terminal.

The area management apparatus may have a table in which the application and information on an area for reserving the application are stored in association with each other, and determine the storage area for setting the plication by using the table. The area to be allocated for the application may also be determined with consideration given to the size of the application and data to be used by the application.

According to a still preferred embodiment, the storage area management method of the present invention further comprises a step of acquiring data to be used by the application and storing the data into the set area, by the communication terminal.

According to a still preferred embodiment, the storage area management method of the present invention further comprises an acquisition step of acquiring, by the communication terminal, a download program necessary for downloading the application, the acquisition step preceding the request step.
The request step, the setting step, and the storing step are performed by executing the download program in the communication terminal.

The present invention also provides a communication terminal comprising: a storage unit; request transmitting means for transmitting an authorization request to an area management apparatus, the authorization request requesting an authorization to set a storage area in the storage unit; setting means for receiving an execution instruction transmitted from the area management apparatus, and setting a storage area in the storage unit in accordance with the received execution instruction, the execution instruction instructing to set an area; and storing means for downloading the application from a server unit, and storing it into the set area.

The present invention also provides an area management apparatus comprising: receiving means for receiving an authorization request from a communication terminal having a storage unit, the authorization request requesting an authorization to set an area available for an application in the storage unit; and transmitting means for determining a storage area to be allocated for the application based on the received authorization request, and transmitting to the communication terminal an execution instruction to execute setting of the determined storage area.

The present invention also provides a computer program for operating a computer as the foregoing area management apparatus. This program may be stored into various recording media, or installed to the computer over a network, for example.

### BRIEF DESCRIPTION OF THE DRAWINGS

Fig. 1 is a diagram showing an example of the overall configuration of a communication system 10 according to an embodiment of the present invention;
Fig. 2 is a diagram showing an example of an application contractor table stored in a storage unit 101 of a content server 100;
Fig. 3 is a diagram showing examples of browser screens to be displayed on a display 605 of a mobile phone 600;
Fig. 4 is a diagram showing an example of the hardware configuration of the mobile phone 600;
Fig. 5 is a diagram showing an example of the hardware configuration of an area management server 500;
Fig. 6 is a diagram showing an example of a data table stored in a storage unit 505 of the area management server 500; and
Fig. 7 is a sequence diagram showing an example of operation according to the embodiment of the present invention.

### BEST MODE FOR CARRYING OUT THE INVENTION

Hereinafter, an embodiment of the present invention will be described with reference to the drawings. Note that the invention is not limited to the present embodiment, but may include any embodiments as fall within the scope set forth in claims. By way of example, the present embodiment will deal with the case of storing an application program for conducting e-commerce by using a mobile phone (hereinafter, referred to as "electronic money application") and electronic money data to be used by this electronic money application into an external memory of the mobile phone.

### 1. Overall Configuration

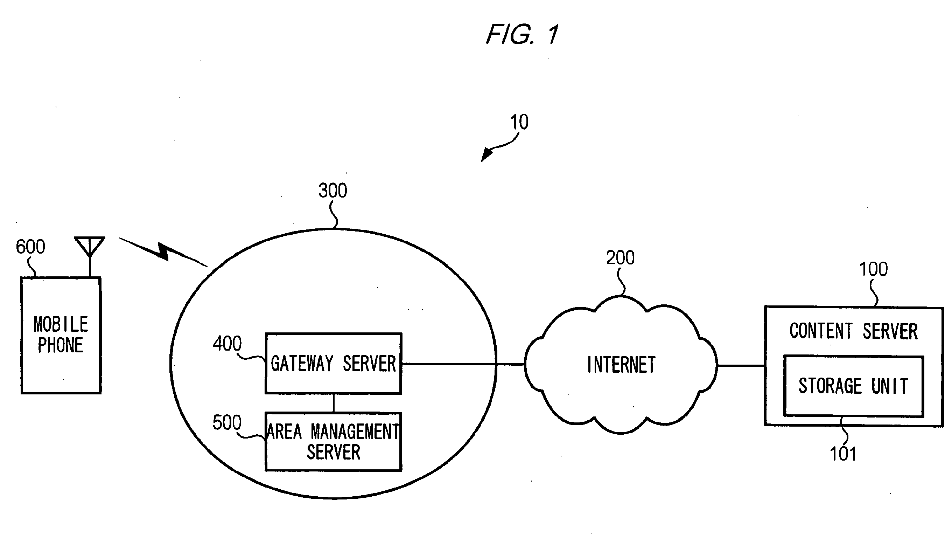

Fig. 1 is a diagram showing an example of the overall configuration of a communication system 10 according to the present embodiment. The communication system 10 may include a plurality of mobile phones and a plurality of content server. In order to avoid complicated drawings, however, a single mobile phone 600 and a single content server 100 alone are shown in the diagram.

The content server 100 has an identifier for identifying the server, or domain name, "www.aaa.com". It has the same hardware configuration as that of a typical WWW server, and is operated by a provider who provides the application to client devices. The content server 100 is connected with the Internet 200, and carries out packet communication with client devices over the Internet 200.

A mobile packet communication network 300 includes a wireless base station for carrying out wireless communication with mobile phones accommodated in the mobile packet communication network 300, an exchange connected to the wireless base station, a gateway exchange connected to the exchange (none of these is shown), a gateway server 400 connected to the gateway exchange, and an area management server 500 connected to the gateway server 400.

These wireless base station, exchange, gateway exchange, and gateway server 400 are used to relay packet communication which is held between the mobile phones accommodated in the mobile packet communication network 300 and the WWW servers such as the content server 100 connected to the Internet 200.

The gateway server 400 is connected with the Internet 200, and has the function of performing interconversion between a communication protocol used inside the mobile packet communication network 300 and a communication protocol used in the Internet 200. Specifically, the gateway server 400 performs interconversion between the wireless communication protocol used in the mobile packet communication network 300 and TCP/IP (Transmission Control Protocol/Internet Protocol) which is used as the standard in the Internet 200. As a result, the communication to be held between the mobile packet communication network 300 and the Internet 20 is relayed by the gateway server 400.

The area management server 500 is a server operated by a communication carrier who operates the mobile packet communication network 300. The area management server 500 is connected to the gateway server 400, and has the same hardware configuration as that of a typical WWW server.
The area management server 500 has the function of carrying out packet communication, and holds packet communication with the mobile phones accommodated in the mobile packet communication network 300 for data exchange.

The mobile phone 600 is one owned by a not-shown user, and carries out packet communication with WWW servers connected to the Internet 200 over the mobile packet communication network 300. Consequently, the user can enjoy a variety of mobile data communication services provided by the mobile packet communication network 300.

### <Content server>

The content server 100 has a storage unit 101 which includes storage devices such as a hard disk, and contains WEB page files to be described later, application programs to be provided to mobile phones, and so on. Specifically, the storage unit 101 contains an electronic money application "shopping" and an application program "trust" which is necessary for downloading the electronic money application to the mobile phone 600 (hereinafter, this will be referred to as "trusted application"). The reliability of this trusted application is secured in advance by the communication carrier who operates the mobile packet communication network 300.

The electronic money application "shopping" is stored in a location specified by a URL (Uniform Resource Locator) "http://www.aaa.com/shopping". The trusted application "trust" is stored in a location specified by "http://www.aaa.com/trsut".

The applications to be stored into the storage unit 101 are also given respective identifiers (hereinafter, referred to as application identifiers). For example, this electronic money application has an application identifier "AAA001". The trusted application is a program to be performed by the mobile phone 600, and has the function of downloading the electronic money application from the content server 100 and storing it into an external memory of the mobile phone by using a device driver provided in the mobile phone 600.

To use the e-commerce service, the user of the mobile phone 600 has previously signed the use contract to the provider who operates the content server 100. That is, the electronic money application and electronic money data will be provided to the mobile phones 600 of contracted users alone.

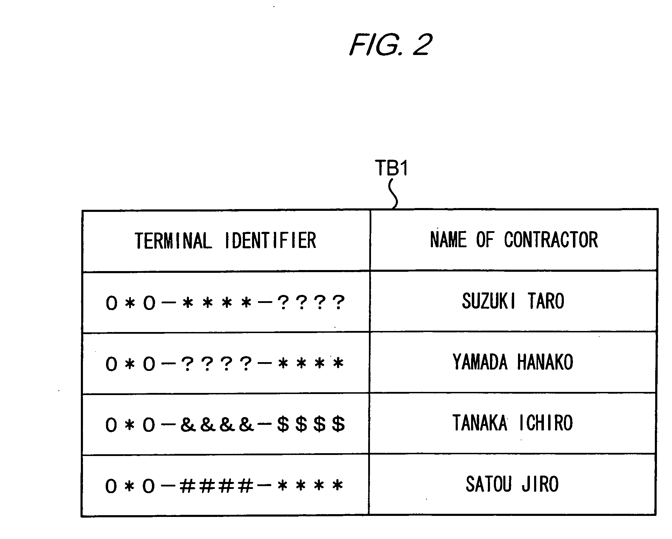

As shown by way of example in Fig. 2, the storage unit 101 contains an application contractor table TB 1 which contains terminal identifiers for identifying the mobile phones 600 owned by contracted persons and the names of the contracted persons in association with each other. The storage unit 101 also contains text files named "index.html" and "download.html" which are written in a markup language CHTML (Compact Hyper Text Markup Language). The file "index.html" is stored in a location specified by a URL "http://www.aaa.com/index.html", and "download.html" is stored in a location specified by a URL "http://www.aaa.com/download.html".

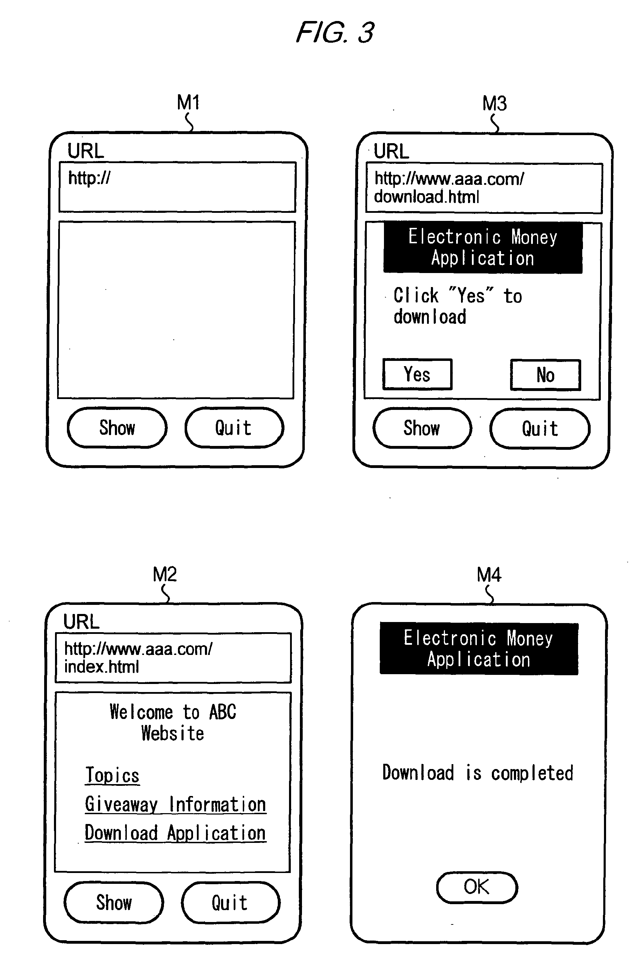

The file "index.html" is written so that when it is interpreted by a WWW browser capable of CHTML interpretation, a WWW browser screen M2 shown by way of example in Fig. 3 appears. Moreover, "index.html" describes URLs that designate the storage locations of file for displaying pages linked with this page. The diagram shows an example of the screen to appear on the mobile phone 600 when the WWW browser executes this file "index.html".

The file "download.html" is written so that when it is interpreted by a WWW browser capable of CHTML interpretation, a page for downloading the trusted application "trust" provided by the content server 100 appears on the screen of the WWW browser. In addition, "download.html" describes an URL that designates the storage location of the trusted application "trust". In Fig. 3, M3 shows an example of the screen to appear on the mobile phone when "download.html" is executed.

The functions of the content server 100 will be described below.

### (A) Providing WEB Pages

The content server 100 provides WEB pages for the mobile phone 600. Specifically, when the content server 100 receives a page request message transmitted from the mobile phone 600 to request a file for displaying a page, the message including a URL and the terminal identifier for identifying the mobile phone, it reads the file specified by the URL from the storage unit 101. Subsequently, the content server 100 generates a page transmission message including the file read from the storage unit 101. Subsequently, the content server 100 transmits the generated message to the mobile phone 600 that is identified by the terminal identifier included in the page request message.

### (B) Providing Applications

When the content server 100 receives an application request message transmitted from the mobile phone 600 to request program download, the message including the terminal identifier and a URL, it searches the application contractor table TB 1 with the terminal identifier included in the request message as a key.

When the appropriate terminal identifier is stored in the application contractor table TB 1, it is determined that the user of the mobile phone 600 is one of those who have signed the use contract for the electronic money application. Subsequently, the content server 100 reads the program specified by the URL from the storage unit 101.

Next, the content server 100 generates an application transmission message including this program. Subsequently, the content server 100 transmits the message generated thus to the mobile phone that is identified by the terminal identifier included in the application request message.

### (C) Instructing Execution of Trusted Application

When this application request message is one for requesting the trusted application, the content server 100 generates an application transmission message including the trusted application read from the storage unit 101 and an instruction for the destination mobile phone of this message to execute the trusted application. The content server 100 transmits the generated message to the mobile phone that is identified by the terminal identifier included in the application request message.

### (D) Providing Electronic Money Data

When the content server 100 receives from the mobile phone 600 an electronic money request message for requesting electronic money data, it searches the application contractor table TB 1 with the terminal identifier included in this message as a key.

When the appropriate terminal identifier is found, the content server 100 determines that the user of the mobile phone 600 originating the electronic money request message is one of those who have signed the use contract for the electronic money application. Subsequently, the content server 100 generates a message including electronic money data which indicates a predetermined amount of money. Next, the content server 100 transmits the generated message to the mobile phone 600 identified by the terminal identifier.

### <Mobile Phone>

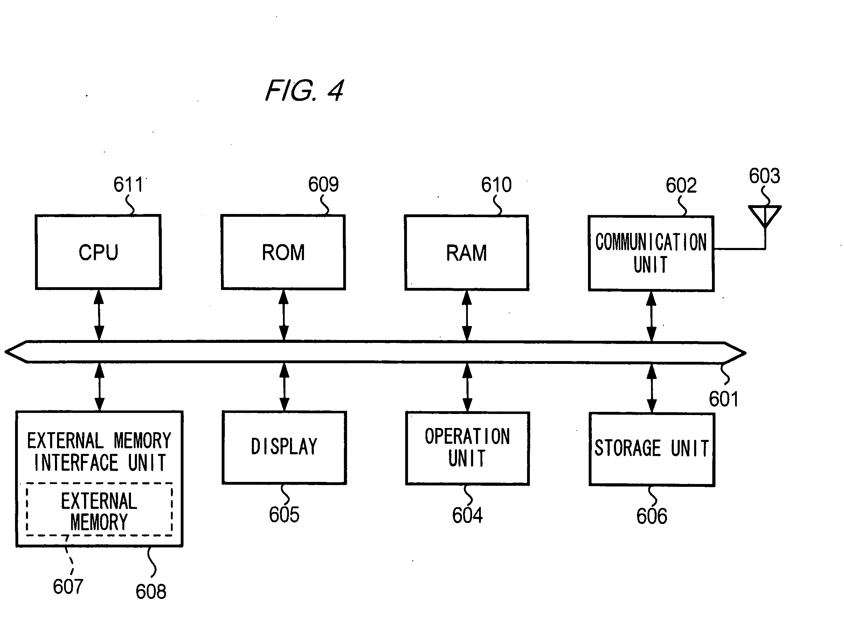

Fig. 4 is a diagram showing an example of the hardware configuration of the mobile phone 600. As shown in Fig. 4, the components of the mobile phone 600 excluding an antenna 603 are connected to a bus 601. Data exchange between the individual components is performed through this bus 601. A communication unit 602 has the antenna 603, and carries out wireless communication with the not-shown wireless base station constituting the mobile packet communication network 300 under the control of a CPU (Central Processing Unit) 611. An operation unit 604 has a plurality of keys including a not-shown numerical keypad. The user of the mobile phone 600 enters instructions by using the operation unit 604. Specifically, when the user of the mobile phone 600 operates the operation unit 604, signals corresponding to the operation are supplied to the CPU 611. A display 605 is composed of, for example, a liquid crystal display panel and a control circuit for exercising display control on the liquid crystal display panel. The display 605 displays text and graphic screens, and menu screens for operating the mobile phone 600, under the control of the CPU 611.

A storage unit 606 has a nonvolatile memory (not shown) such as an EEPROM (Electrically Erasable and Programmable Read Only Memory), for example. It contains data for controlling the mobile phone 600 as well as the terminal identifier for identifying the mobile phone 600 uniquely. For example, this terminal identifier is a phone number "0*0-****-????". An external memory 607 is an IC card having a nonvolatile memory such as an EEPROM.
It is detachably attached to the mobile phone 600 via an external memory interface unit 608. The external memory interface unit 608 is an interface for writing and reading data to/from the external memory 607 under the control of the CPU 611. A ROM (Read Only Memory) 609 contains various programs to be executed by the CPU 611.. For example, it contains an OS (Operating System) program for controlling the entire mobile phone 600, a WWW browser program, and a device driver intended for the external memory 607.

This device driver is composed of programs called "download helper" and "access helper". As will be detailed later, these programs are executed only when the trusted application is in execution. That is, while an application or data is downloaded, the trusted application, the download helper, and the access helper are executed. The storage area of the external memory 607 is optimized thus.

A RAM (Random Access Memory) 610 is used as a work area of the CPU 611. Data to be used by the programs executed by the CPU 611 is temporarily stored therein. When the mobile phone 600 is powered on, the CPU 611 reads the OS from the ROM 609 for execution. When the OS is in execution, the CPU 611 performs processing according to signals received by the communication unit 602 and signals supplied from the operation unit 604.
If a user operation instructs to start the WWW browser, the WWW browser program is read from the ROM 609 for execution. When a signal corresponding to a user operation is supplied from the operation unit 604 after the execution of the WWW browser, the CPU 611 identifies the user instruction based on this signal and the screen displayed on the display 605, and performs processing according to this instruction.

The functions of the mobile phone 600 will be described below.

### (A) Page Browsing and File Download

To browse a WEB page provided by a WWW server in connection with the Internet 200 from the mobile phone 600, the user of the mobile phone 600 initially enters a URL. Subsequently, the CPU 611 transmits the page request message for requesting the file for displaying the WEB page specified by this URL, the message including the terminal identifier and the URL. This page request message includes the terminal identifier and the URL. Then, it receives the page transmission message transmitted from the content server 100 in response to the page request message, and extracts the file included in this page transmission message.

Moreover, to download an application provided by a WWW server in connection with the Internet 200, the user makes a predetermined operation. The CPU 611 then transmits the application request message for requesting application download. This message includes the terminal identifier and a URL which designates the location of the file to be downloaded. Then, it receives the application transmission message transmitted in response to the application request message, and extracts the application included in this message.

### (B) Application Download Function

The download helper has the functions of reserving a storage area in the external memory 607 for storing an application provided by the content server 100 and data to be used by this application, and storing the application into the reserved storage area. To be more specific, the mobile phone 600 initially downloads the trusted application provided by the content server 100. Then, when the CPU 611 receives the instruction to execute the trusted application transmitted from the content server 100, it executes this trusted application. Subsequently, the download helper is executed by this trusted application.

The download helper generates an area reservation request message for reserving a storage area in the external memory 607 for storing the electronic money application and the electronic money data provided by the content server 100, and transmits it to the area management server 500. This message includes the terminal identifier stored in the ROM 609 and an application identifier of the trusted application. When an area reservation instruction message transmitted from the area management server 500 in response to the area reservation request message is received, this area reservation instruction message is interpreted by the trusted application in execution.

When the trusted application determines that this area reservation instruction message is one for instructing to reserve the storage area for storing the application and data, the download helper is executed to control the external memory interface unit 608. Consequently, the area for storing the electronic money application and the electronic money data is reserved in the external memory 607.

When the storage area is thus reserved in the external memory 607, the trusted application generates an application request message for downloading the electronic money application, and transmits it to the content server 100. This application request message includes the URL for designating the storage location of the electronic money application, the trusted application containing the URL.

When the CPU 611 receives the application transmission message transmitted from the content server 100 in response to the application request message, it executes the trusted application to extract the electronic money application included in the application transmission message. Next, the trusted application executes the download helper. The download helper controls the external memory interface unit 608 to store the extracted electronic money application into the external memory 607.

As above, according to the present embodiment, it is impossible to reserve any storage area in the external memory 607 or to store any application thereto without using the download helper.

### (C) Data Download Function

The access helper is a program having the function of storing the electronic money data provided by the content server 100 into the external memory 607.

When the user makes a predetermined operation from the mobile phone 600 while the trusted application is in execution, the access helper is executed. The access helper generates an electronic money request message for requesting the electronic money data provided by the content server 100, and transmits it to the content server 100.

When a message transmitted from the content server 100 in response to the electronic money request message is received, the trusted application extracts the electronic money data included in the received message. Subsequently, the access helper is executed to control the external memory interface unit 608, whereby the electronic money data is stored into the external memory 607.

### <Area Management Server>

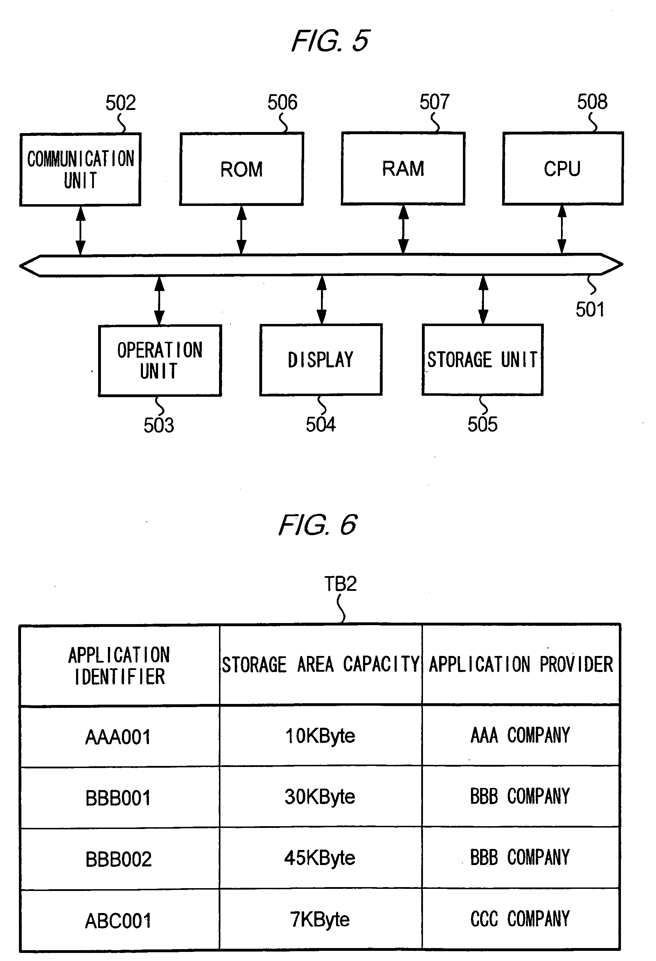

Fig. 5 is a diagram showing an example of the hardware configuration of the area management server 500 according to the present embodiment. As shown in Fig. 5, the components of the area management server 500 are connected to a bus 501. The individual components of the area management server 500 exchange data through this bus 501.

A communication unit 502 is an interface for carrying out communication with the mobile phone 600 via the gateway server 400. An operation unit 503 is composed of input devices such as a not-shown keyboard and mouse. The administrator of the area management server 500 enters various instructions to the area management server 500 from this operation unit 503. Specifically, when operated by the administrator of the area management server 500, the operation unit 503 supplies signals describing the operations to a CPU 508. A display 504 has a not-shown liquid crystal display and driver circuit for driving the liquid crystal display. It displays screens to be provided to the administrator, such as a menu screen, under the control of the CPU 508.

A storage unit 505 is made of storage devices such as a hard disk. It contains a data table TB2 shown by way of example in Fig. 6, in which application identifiers, the capacities of storage areas necessary for storing the corresponding applications (hereinafter, referred to as application area capacities), and the names of providers providing the applications are stored in association with one another. In addition, the storage unit 505 contains a control program for controlling the area management server 500.

A ROM 506 contains an IPL (Initial Program Loader). A RAM 507 is used as a work area of the CPU 508. Data to be used by the programs executed by the CPU 508 is temporarily stored therein. When the area management server 500 is powered on, the CPU 508 reads the IPL from the ROM 506 for execution. Subsequently, the CPU 508 reads the control program from the storage unit 505 for execution.

This control program has the function of instructing the mobile phone 600 to reserve a storage area for storing the electronic money application and the electronic money data provided by the content server 100.

Specifically, when it receives an area reservation request message transmitted from the mobile phone 600 while the control program is in execution, the CPU 508 searches the data table TB2 with the application identifier included in the message as a key. If the appropriate application identifier is found, the CPU 508 reads the application area capacity corresponding to the application identifier from the storage unit 505. For example, as shown in Fig. 6, if an application identifier "BBB001" is included in the area reservation request message, an application area capacity of "30 kByte" is read. Subsequently, the CPU 508 generates an area reservation instruction message for instructing to reserve the storage area for storing the application and data to be used by the application. Subsequently, the CPU 508 transmits the area reservation instruction message to the mobile phone that is identified by the terminal identifier included in the area reservation request message received previously.

As described above, since the area management server 500 is operated by the communication carrier who operates the mobile packet communication network 300 and is installed inside the mobile packet communication network 300, the confidentiality of the area reservation request message is secured.

### 2. Operation

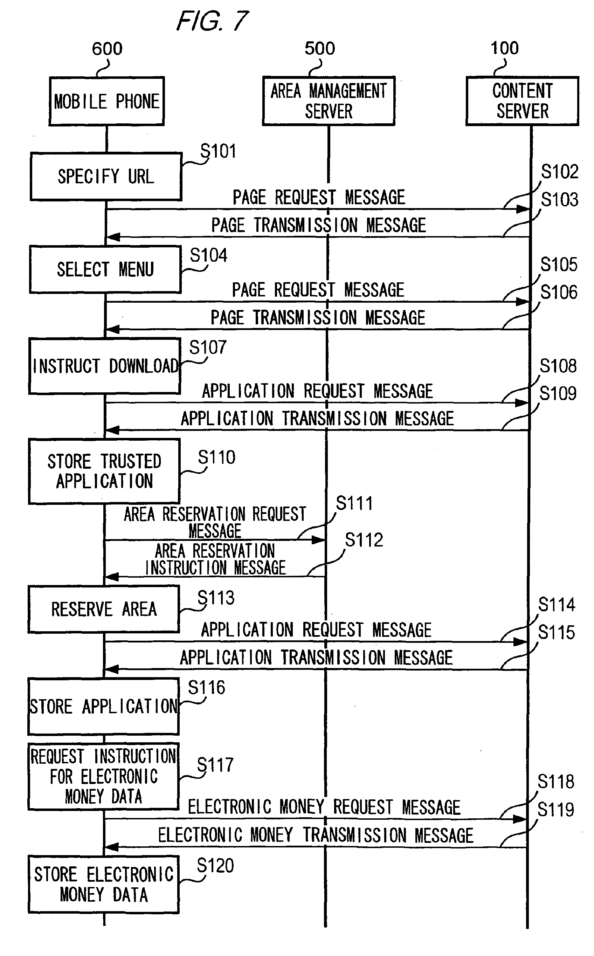

Next, an example of operation of the present embodiment will be described with reference to Fig. 7.

Incidentally, the area management server 500 and the content server 100 shall be powered on in advance. Besides, the mobile phone 600 shall be powered on in advance, and the OS and the WWW browser be executed to display the WWW browser screen M1 shown in Fig. 3.

Initially, the user of the mobile phone 600 enters "http://www.aaa.com/index.html", the URL of a Web page file provided by the content server 100 having the server name "www.aaa.com", into the text box intended for URL specification displayed on the screen M1 shown in Fig. 3. The user makes a click operation on the "Show" button on the same screen. Then, a page request message for requesting the file of that Web page is generated (step S101). This page request message includes the terminal identifier "0*0-****-????" and the entered URL
"http://www.aaa.com/index.html".
The page request message generated is transmitted to the content server 100 specified by "www.aaa.com" via the mobile packet communication network 300 and the Internet 200 (step S102).

When the content server 100 receives this page request message, the file "index.html" that is specified by the URL included in the page request message is read from the storage unit 101. Next, a page transmission message including the read file "index.html" is generated. Besides, from the terminal identifier included in the page request message, the originating mobile phone 600 is identified. This page transmission message is transmitted to the identified mobile phone 600 via the Internet 200 and the mobile packet communication network 300 (step S103).

When the page transmission message is received at the mobile phone 600, the file "index.html" included in this page transmission message is extracted. The WWW browser interprets "index.html", and the screen M2 shown in fig .3 appears on the display 605.

When the user of the mobile phone 600 clicks on the part of the "Download Application" shown underlined on the WWW browser screen M2, the URL "http://www.aaa.com/download.html" linked with the "application download" in the file "index.html" is extracted (step S104). Subsequently, a page request message for requesting "download.html" designed by the extracted URL is generated. This page request message includes the terminal identifier of the mobile phone 600 and the extracted URL. Then, this page request message is transmitted to the content server 100 which is represented by the server name "www.aaa.com" (step S105).

When the page request message transmitted from the mobile phone 600 is received at the content server 100, the file "download.html" that is specified by the URL included in this page request message is read from the storage unit 101. Next, a page transmission message including the read file "download.html" is generated. Then, this page transmission message is transmitted to the mobile phone 600 that is identified by the terminal identifier included in the page request message (step S 106).

When the page transmission message is received at the mobile phone 600, the file "download.html" included in this page transmission message is read. The WWW browser interprets "download.html", and the screen M3 shown in Fig. 3 appears.

When the user of the mobile phone 600 clicks on the "Yes" button displayed on the same screen M3, the URL "http://www.aaa.com/trust" described in "download.html" is extracted. Then, an application request message for requesting acquisition of the trusted application "trust" that is specified by the URL is generated (step S107). This application request message includes the terminal identifier and the extracted URL. The application request message generated is transmitted to the content server 100 represented by the server name "www.aaa.com" (step S 108).

When the application request message is received at the content server 100, the application contractor table TB 1 stored in the storage unit 101 is searched with the terminal identifier included in this message as a key. Since the terminal identifier "0*0-****-????" is already registered on the application contractor table TB 1, the user of the mobile phone 600 is determined to be one who has signed the use contract for the electronic money application. Consequently, the trusted application included in the application request message, or "trust", is read. Subsequently, an application transmission message including the read "trust" and an execution instruction for the trusted application is generated. The application transmission message generated is transmitted to the mobile phone 600 that is identified by the terminal identifier included in the application request message (step S 109).

When the application transmission message is received at the mobile phone 600, the trusted application included in the message is stored into the storage unit 606 (step S110). Subsequently, "trust" is executed according to the execution instruction for this trusted application. Subsequently, the download helper is executed to generate an area reservation request message for reserving a storage area in the external memory 607 for storing the electronic money application "shopping" and the electronic money data. This message includes the terminal identifier and the application identifier "AAA001" of the electronic money application. This message is transmitted from the mobile phone 600 to the area management server 500 (step S111).

When the area reservation request message is received at the area management server 500, the data table TB2 stored in the storage unit 505 of the area management server 500 is searched with the application identifier included in this message as a key. Then, the corresponding application area capacity " 10 KBytes" is read.

Next, the area management server 500 generates an area reservation instruction message including the read application area capacity. This message is transmitted to the mobile phone 600 that is identified by the terminal identifier included in the area reservation request message (step S112).

When the area reservation instruction message is received at the mobile phone 600, the trusted application determines that this area reservation instruction message is to instruct of the reservation of the storage area for storing an application and data to be used by the application. Then, the trusted application controls the external memory interface unit 608 by using the download helper, so that an area of "10 KBytes" for storing the application program "shopping" and the electronic money data to be used by "shopping" is reserved in the external memory 607 (step S113). Next, the trusted application generates an application request message including the URL "http://www.aaa.com/shopping" of the electronic money application and the terminal identifier. This message is transmitted from the mobile phone 600 to the content server 100 that provides "shopping" (step S114).

When the application request message is received at the content server 100, the application contractor table TB 1 stored in the storage unit 101 is searched with the terminal identifier included in this message as a key. Since the terminal identifier "0*0-****-????" is already registered on the application contractor table TB1, the user of the mobile phone 600 is determined to be one who has signed the use contract for the electronic money application. Consequently, "shopping" which is specified by the URL included in the application request message is read from the storage unit 101. Subsequently, an application transmission message including the read electronic money application is generated. This message is transmitted to the mobile phone 600 that is identified by the terminal identifier included in the application request message (step S115).

When the application transmission message is received at the mobile phone 600, the trusted application extracts the electronic money application "shopping" included in the message. Subsequently, the download helper is executed to store the extracted "shopping" into the storage area reserved in the external memory 607 (step S116). Subsequently, the screen M4 shown in Fig. 3, indicating the completion of the download of the electronic money application, appears on the display 605.

When the user of the mobile phone 600 makes an operation for acquiring the electronic money data provided by the content server 100 (step S 117), the trusted application generates an electronic money request message for requesting the electronic money data. This message includes the terminal identifier, and is transmitted from the mobile phone 600 to the content server 100 (step S118).

When the electronic money request message is received at the content server 100, the application contractor table TB1 stored in the storage unit 101 is searched with the terminal identifier included in this message as a key. Since the terminal identifier "0*0-****-????" is registered on the application contractor table TB 1, the user of the mobile phone 600 is determined to be one who has signed the use contract for the electronic money application. Thus, an electronic money transmission message including the electronic money data on a predetermined amount of money is generated. This message is transmitted from the content server 100 to the mobile phone 600 that is identified by the terminal identifier included in the electronic money request message (step S 119).

When the electronic money transmission message is received at the mobile phone 600, the electronic money data on the predetermined amount of money, included in this message, is extracted by the trusted application. The access helper is executed to store the extracted electronic money data into the external memory 607 (step S120).

As described above, the present embodiment is configured so that the device driver necessary for accessing the external memory 607, including the download helper and the access helper, cannot be used unless the execution instructions are given from the area management server 500 and the content server 100. It is therefore possible to prevent applications and data stored in the external memory from being tampered or erased by using the device driver from a downloaded application. In addition, since appropriate storage areas are reserved for respective applications, it is possible to use the storage areas of the external memory efficiently.

### 3. Modification

In the foregoing embodiment, the applications and data downloaded from the content server 100 are stored into the external memory 607 in unencrypted form. Nevertheless, the mobile phone 600 may encrypt the applications and data when it stores the applications and data into the external memory 607.

The external memory 607 may also be accessed with a key all the time. Specifically, this key is held in the area management server 500. When the area management server 500 receives the area reservation request message from the mobile phone 600, it attaches this key to the area reservation instruction message. The mobile phone 600 accesses the external memory 607 by using this key. The external memory 607 cannot be accessed if no key is attached or if the key is unauthorized. This improves the security of the mobile phone 600 further.

Among IC cards available for use as the external memory are a contact type which requires contact with the interface at the time of access and a noncontact type which requires no contact. Either type of IC card may be used in the present invention.

In the foregoing embodiment, the mobile phone 600 receives the trusted application and the execution instruction for this trusted application together. Nevertheless, the execution instruction may be given so that the trusted application is executed automatically by the mobile phone 600. In this case, for example, the content server makes the mobile phone 600 acquire predetermined data indicating that this application is the trusted application, at the time of download. The mobile phone 600 shall perform the downloaded application automatically only when it receives this data.

The foregoing embodiment has dealt with the mobile phone 600 as an example of the terminal for downloading applications. It is understood, however, that this terminal is not limited to a mobile phone, but may be such mobile communication terminals as PDAs (Personal Digital Assistants) as long as they can access the mobile packet communication network 300.

The mobile phone 600 may be provided with the facilities of executing programs written in accordance with the Java (TM) programming language, so that the trusted application and the electronic money application are written in accordance with the Java programming language.

In the foregoing embodiment, the trusted application is provided by the content server 100. Nevertheless, the contents may be provided by the area management server 500. To be more specific, the provider who operates the content server 100 initially provides the trusted application to the communication carrier who operates the area management server 500. This communication carrier verifies that this trusted application is not unauthorized one, and then stores it into the storage unit 505. Consequently, all the contents are provided from the trusted application to the mobile phone 600.

According to such an embodiment, the applications provided to the mobile phone 600 are checked for reliability by the area management server 500. This prevents the content server 100 from updating or otherwise modifying the trusted application freely. As a result, it becomes possible, for example, to monitor unauthorized acts such as tempering on the trusted application disguised as upgrading. This improves the security of the mobile phone 600 further.

Moreover, even if a trusted application that makes unauthorized operation is discovered, the communication carrier can stop the provision of the application to the mobile phone 600 immediately. Consequently, even if some unauthorized application is already provided to the mobile phone 600, it is possible to suppress the damage to a minimum.

In the foregoing embodiment, the trusted application downloaded from the content server 100 to the mobile phone 600 performs the area reservation in the external memory 607 and the download of the electronic money application and the electronic money data. Nevertheless, the trusted application may be configured to perform the download of applications and data to be used by the applications alone. In this case, for example, a trusted application dedicated to the management of storage areas may be downloaded to the mobile phone 600 in advance so that area reservation is always performed by using this trusted application intended for area reservation. In this case, the content server 100 is not involved in the process of area reservation. This makes it substantially impossible for the content server 100 to conduct unauthorized processing on the external memory, thereby improving the security of the mobile phone 600 further.

In the foregoing embodiment, the download helper is stored in the ROM 609 of the mobile phone 600 and is configured unchangeable. Nevertheless, the download helper may be rendered capable of being updated when needed.

To be more specific, in the foregoing embodiment where the area management server 500 provides the trusted application for performing area management alone, the function of the download helper is given to the trusted application. Then, the trusted application having this function is downloaded from the area management server 500. According to such an embodiment, it becomes possible to upgrade the function of the download helper while securing the reliability on the external memory 607.

It is understood that the application of the method of the present embodiment is not limited to the external memory. The storage areas for storing applications and data to be used by the applications may be reserved in a nonvolatile memory built in the mobile phone 600, such as a flash memory. Moreover, the external memory may be configured undetachable.

In the foregoing embodiment, the area reservation instruction message transmitted from the area management server 500 includes the information on the storage area capacity. Nevertheless, the area management server 500 may transmit the specification on the capacity of the storage area and the instruction for the reservation of the storage area to the mobile phone 600 separately.

Moreover, in the foregoing embodiment, the trusted application interprets the area reservation instruction message, and carries out the reservation of the storage area by using the download helper. However, the method of interpreting the area reservation instruction message is not limited to this method. For example, the download helper may take charge of both the interpretation of the area reservation instruction message and the reservation of the storage area.

Furthermore, in the foregoing embodiment, the accesses of the mobile phone to the external memory are managed by using the trusted application, an application whose reliability is secured in advance. Nevertheless, any application may be used if what is intended is only the efficient use of the storage area in situations where no consideration needs to be given to security problems. For example, some area of the external memory may be configured accessible by using applications other than reliability-secured trusted applications.

## Claims

1. A storage area management method comprising:
a request step of transmitting an authorization request from a communication terminal having a storage unit to an area management apparatus, the authorization request requesting an authorization to set an area available for an application in said storage unit;
an instruction step of, when said area management apparatus receives said authorization request, determining in said area management apparatus a storage area to be allocated for said application based on said received authorization request, and transmitting to said communication terminal an execution instruction to execute setting of the determined storage area; and
a setting step of, when said communication terminal receives said execution instruction, setting said determined storage area in said storage unit.

2. A storage area management method according to Claim 1, further comprising a storing step of downloading the application from a content server or the area management server and storing the application into the set area, by the communication terminal.

3. A storage area management method according to Claim 2, wherein said area management apparatus has a table in which said application and information on an area for to be allocated for the application are stored in association with each other, and said area management apparatus determines said storage area to be allocated for the application by using said table.

4. A storage area management method according to Claim 2, wherein said area to be allocated for the application is determined with consideration given to the size of said application and data to be used by said application.

5. A storage area management method according to Claim 2, further comprising a step of acquiring data to be used by said application and storing the data into said set area, by said communication terminal.

6. A storage area management method according to Claim 2, further comprising an acquisition step of acquiring a download program necessary for downloading said application by said communication terminal, the acquisition step preceding said request step, and wherein
said request step, said setting step, and said storing step are performed by executing said download program in said communication terminal.

7. A storage area management method according to Claim 2, wherein said storage unit is detachably attached to said communication terminal.

8. A storage area management method according to Claim 2, wherein said communication terminal is a mobile terminal, and carries out communication with said area management apparatus over a wireless communication network.

9. A communication terminal comprising:
a storage unit;
request transmitting means for transmitting an authorization request to an area management apparatus, the authorization request requesting an authorization to set a storage area in said storage unit;
setting means for receiving an execution instruction transmitted from said area management apparatus, and setting a storage area in said storage unit in accordance with the received execution instruction, the execution instruction instructing to set an area; and
storing means for downloading an application from a server unit and storing the application into said set area.

10. A communication terminal according to Claim 9, further comprising acquisition means for acquiring a download program necessary for downloading said application.

11. An area management apparatus comprising:
receiving means for receiving an authorization request from a communication terminal having a storage unit, the authorization request requesting an authorization to set an area available for an application in said storage unit; and
transmitting means for determining a storage area to be allocated for said application based on the received authorization request, and transmitting to said communication terminal an execution instruction to execute setting of the determined storage area.

12. A computer program product for operating a computer as:
receiving means for receiving an authorization request from a communication terminal having a storage unit, said authorization request requesting an authorization to set an area available for an application in said storage unit; and
transmitting means for determining a storage area to be allocated for said application based on said received authorization request, and transmitting to said communication terminal an instruction to reserve said determined storage area.

13. A computer-readable recording medium containing a program for operating a computer as:
receiving means for receiving an authorization request from a communication terminal having a storage unit, said authorization request requesting an authorization to set an area available for an application in said storage unit; and
transmitting means for determining a storage area to be allocated for said application based on said received authorization request, and transmitting to said communication terminal an instruction to reserve said determined storage area.
